# EUROPÄISCHE PATENTSCHRIFT

(11) **EP 2 146 107 B1**
(45) Veröffentlichungstag und Bekanntmachung des Hinweises auf die Patenterteilung: **29.02.2012**
(21) Anmeldenummer: 09007747.0
(22) Anmeldetag: 12.06.2009
(51) Int. Cl.: F16D 3/84

(54) **Schutzanordnung für ein Doppelkreuzgelenk**
Protective assembly for a double universal joint
Agencement de protection pour un joint universel double

(30) Priorität: 18.07.2008 DE 102008033920
(43) Veröffentlichungstag der Anmeldung: 20.01.2010
(73) Patentinhaber: GKN Walterscheid GmbH, 53797 Lohmar (DE)
(72) Erfinder: Hector, Martin, 53721 Siegburg (DE); Herchenbach, Paul, 53809 Ruppichteroth (DE)
(74) Vertreter: Müller, Thomas Michael

(56) Entgegenhaltungen:
- EP-A1- 1 529 429
- EP-A2- 0 969 218
- CH-A- 381 478
- DE-A1- 10 037 041
- DE-A1- 19 544 911
- DE-U- 1 966 532

## Beschreibung

Die Erfindung betrifft eine Schutzanordnung für ein um eine Drehachse drehend angeordnetes Doppelkreuzgelenk, umfassend einen rohrförmigen Schutztrichter, einen Gleitring, der, zur drehenden Lagerung der Schutzanordnung an dem Doppelkreuzgelenk drehbar gelagert werden kann, drehfest mit dem Schutztrichter verbunden ist, einen Adapterring, der mit dem Schutztrichter drehfest verbunden ist, sowie einen Faltenbalg, der drehfest mit dem Adapterring verbunden ist.

Eine Schutzanordnung dieser Art zeigt die DE 100 37 041 A1, bei der ein trichterförmiger Lagerring über einen Gleitring auf dem Doppelkreuzgelenk drehbar gelagert ist. Weiterhin ist ein Führungsring drehfest mit dem trichterförmigen Lagerring verbunden, wobei über den Führungsring ein faltenbalgartiger Schutztrichter mit dem Lagerring drehfest verbunden ist. Der faltenbalgartigen Schutztrichter ist an seinem entgegengesetzten axialen Ende mit einem Schutzrohr für die Gelenkwelle verbunden. Traktorseitig ist die Schutzanordnung offen.

Eine weitere Schutzanordnung ist aus der DE 101 53 822 C1 bekannt, wobei der Schutztrichter um ein erstes Kreuzgelenk des Doppelkreuzgelenks angeordnet ist. Über Verbindungsmittel in Form von Haltevorsprüngen ist der Schutztrichter drehfest mit einem Schutzelement verbunden, welches einerseits mit dem Schutztrichter und andererseits mit dem Gelenkwellenschutz verbunden ist und in Form einer Gitterstruktur ausgebildet ist. Das Schutzelement ist flexibel gestaltet, um Winkelabweichungen ausgleichen zu können. Ein erstes Ende des Schutztrichters, welches dem Schutzelement abgewandt angeordnet ist, steht über den Gleitring über und verdeckt teilweise ein zweites Kreuzgelenk des Doppelkreuzgelenks. Dennoch besteht am ersten Ende des Schutztrichters die Gefahr, dass Bedienpersonal in drehende Bauteile des Doppelkreuzgelenks fassen kann.

Aufgabe der vorliegenden Erfindung ist es daher, eine Schutzanordnung der eingangs genannten Art bereitzustellen, bei der ein vollständiger Schutz des Doppelkreuzgelenks gegeben ist.

Die Aufgabe wird erfindungsgemäß durch eine eingangs genannte Schutzanordnung gelöst, wobei der rohrförmigen Schutztrichter an seinem dem Adapterring axial abgewandten Ende Verbindungsmittet zum drehfesten Verbinden des Schutztrichters mit einem Gelenkwellenschutz einer mit dem Doppelkreuzgelenk verbundenen Welle aufweist und wobei der Faltenbalg Verbindungsmittel zum drehfesten Verbinden des Faltenbalgs mit einem stehenden Bauteil aufweist, um die Schutzanordnung gegenüber dem stehenden Bauteil drehfest zu halten.

Durch diese Ausgestaltung ist gewährleistet, dass das Doppelkreuzgelenk vollständig geschützt ist. Aufgrund des Adapterrings ist es möglich, eine einzige Faltenbalggröße für unterschiedlich große Doppelkreuzgelenke zu verwenden. Bei verschiedenen Größen von Doppelkreuzgelenken ist sowohl der Gleitring als auch der Schutztrichter auf die Größe des Doppelkreuzgelenks angepasst. Für jede Schutztrichtergröße kann ein Adapterring vorgesehen sein, der derart angepasst ist, dass er auf jeweils eine Größe eines Schutztrichters aufsetzbar ist, wobei alle Adapterringe für unterschiedlich große Schutztrichter wiederum derart ausgebildet sind, dass eine gemeinsame Größe eines Faltenbalgs mit dem Adapterring verbunden werden kann. Somit wird die benötigte Teilevielfalt deutlich reduziert, da für unterschiedlich große Doppelkreuzgelenke ein einziger Faltenbalgtyp verwendet werden kann.

Vorzugsweise ist vorgesehen, dass der Schutztrichter ein erstes Ende aufweist, mit dem der Schutztrichter sowohl mit dem Gleitring als auch mit dem Adapterring verbunden ist. Insbesondere kann der Adapterring um den Gleitring angeordnet sein. Dabei kann der Schutztrichter nicht oder nur geringfügig über den Gleitring überstehen, so dass die Länge des Faltenbalgs möglichst groß ist, um in günstiger Weise Winkelverstellungen ausgleichen zu können.

Um eine möglichst gute Befestigung des Adapterrings vorzusehen, können sowohl der Schutztrichter als auch der Adapterring mit dem Gleitring verbunden sein.

Der Faltenbalg weist einen Befestigungsabschnitt auf, mit dem dieser mit dem Adapterring verbunden ist.

Hierbei weist der Adapterring eine Befestigungsaufnahme auf, in der der Befestigungsabschnitt des Faltenbalgs aufgenommen und gehalten ist.

Die Befestigungsaufnahme weist zumindest eine dem Schutztrichter zugewandte erste Befestigungsfläche auf, gegen die der Befestigungsabschnitt des Faltenbalgs gehalten ist. Vorzugsweise ist eine einzige erste Befestigungsfläche vorgesehen, die um die Drehachse umlaufend angeordnet ist.

Ferner kann vorgesehen sein, dass die Befestigungsaufnahme zumindest eine dem Faltenbalg zugewandte zweite Befestigungsfläche aufweist, gegen die der Befestigungsabschnitt des Faltenbalgs gehalten ist.

Hierbei können mehrere zweite Befestigungsflächen vorgesehen sein, die jeweils von einem Vorsprung am Adapterring gebildet sind. Vorzugsweise sind die zweiten Befestigungsflächen auf einer umlaufenden gedachten Mantelebene angeordnet.

Alternativ hierzu kann eine einzige umlaufende dem Faltenbalg zugewandte zweite Befestigungsfläche vorgesehen sein, die zusammen mit genau einer umlaufenden ersten Befestigungsfläche eine Befestigungsnut bildet. Die Befestigungsnut ist insbesondere als Innenumfangsnut ausgebildet.

Die Befestigungsflächen können, jeweils bezogen auf die Drehachse, konusförmig gestaltet sein, bzw., bei mehreren ersten oder zweiten Befestigungsflächen, auf einer konusförmigen gedachten Mantelfläche angeordnet sein.

Um eine einfache Montage des Faltenbalgs zu gewährleisten, ist vorgesehen, dass der Faltenbalg mehrere umlaufende Falten aufweist, die jeweils durch zwei Flanken gebildet sind, und dass der Befestigungsabschnitt des Faltenbalgs eine Falte umfasst, deren Flanken aneinanderliegen und gegen die mindestens eine erste Befestigungsfläche in Anlage gehalten sind.

Der Befestigungsabschnitt lässt sich somit einfach zwischen der mindestens einen ersten Befestigungsfläche und der mindestens einen zweiten Befestigungsfläche einbringen. Hierbei ist der Adapterring bereits mit dem Faltenbalg verbunden, ohne dass weitere Befestigungsmittel erforderlich wären. Der Befestigungsabschnitt des Faltenbalgs ist zwischen der mindestens einen ersten Befestigungsfläche und der mindestens einen zweiten Befestigungsfläche eingeklemmt bzw. in den Zwischenraum zwischen den Befestigungsflächen eingeschnappt.

Dadurch, dass der Befestigungsabschnitt durch die Flanken einer Falte gebildet ist, lässt sich die Länge des Faltenbalgs einfach adaptieren, indem entsprechend der erforderlichen Faltenbalglänge Falten abgeschnitten werden. Wenn alle Falten den gleichen Außen- und Innendurchmesser aufweisen, kann jede Falte als Befestigungsabschnitt dienen, wodurch wiederum die Teilevielfalt verringert wird, da ein und derselbe Faltenbalg aufgrund der Verwendung unterschiedlicher Adapterringe für unterschiedliche Schutztrichter und aufgrund der Möglichkeit des Abschneidens einzelner Falten für unterschiedliche Längen eingesetzt werden kann.

Nach dem Vormontieren des Adapterrings mit dem Faltenbalg lässt sich eine feste und dauerhafte Verbindung dadurch erzielen, dass Befestigungsschrauben durch den Adapterring in den Befestigungsabschnitt des Faltenbalgs eingeschraubt werden.

Nach der Vormontage des Adapterrings mit dem Faltenbalg kann der Adapterring mit Befestigungsschrauben am Schutztrichter befestigt werden.

Hierbei kann zumindest ein Teil der Befestigungsschrauben zudem in den Gleitring eingeschraubt sein.

Es kann auch vorgesehen sein, dass der Befestigungsabschnitt des Faltenbalgs zwischen der mindestens einen ersten Befestigungsfläche des Adapterrings und dem Schutztrichter gehalten ist.

Hierbei können Befestigungsschrauben durch den Adapterring und durch den Befestigungsabschnitt des Faltenbalgs in den Schutztrichter eingeschraubt sein.

Bevorzugte Ausführungsbeispiele werden im folgenden anhand der Zeichnungen näher erläutert.

Hierin zeigen
- Figur 1: eine erfindungsgemäße Schutzanordnung in einem Teillängsschnitt;
- Figur 2: eine Schnittdarstellung einer vergrößerten Darstellung einer ersten Aus- führungsform eines Adapterrings;
- Figur 3: eine weitere Schnittdarstellung des Adapterrings gemäß Figur 2;
- Figur 4: eine Schnittdarstellung einer vergrößerten Darstellung einer zweiten Aus- führungsform eines Adapterrings, und
- Figur 5: eine weitere Schnittdarstellung des Adapterrings gemäß Figur 4.

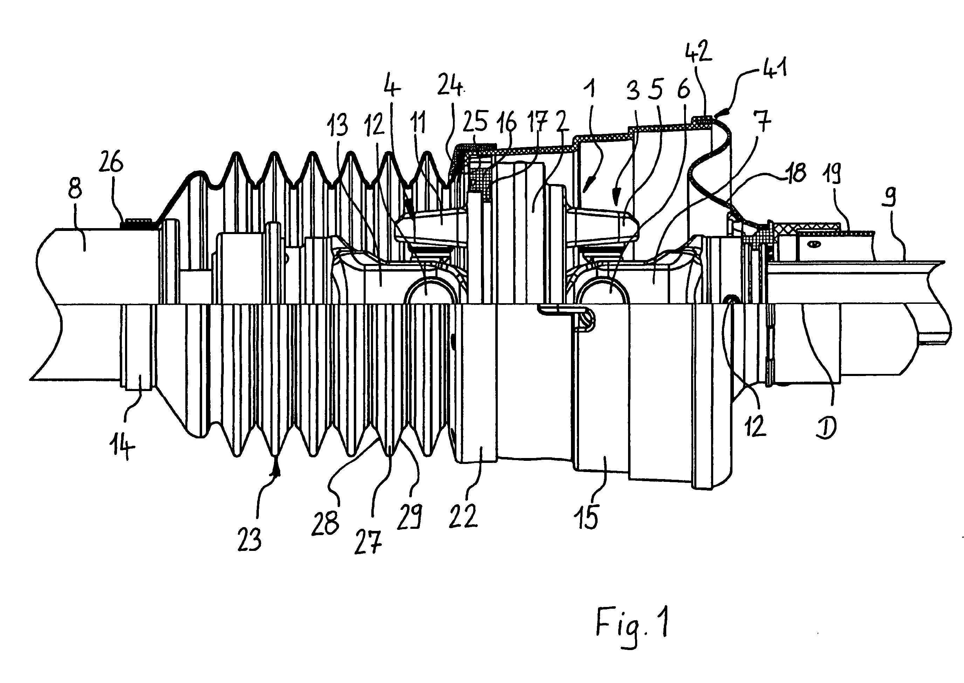

Figur 1 zeigt ein Doppelkreuzgelenk 1 mit einer Doppelgabel 2. Die Doppelgabel 2 ist Bestandteil eines ersten Kreuzgelenks 3 und eines zweiten Kreuzgelenks 4. Das erste Kreuzgelenk 3 umfasst eine erste innere Gabel 5, die Bestandteil der Doppelgabel 2 ist. Die erste innere Gabel 5 ist über ein erstes Zapfenkreuz 6 mit einer ersten äußeren Gabel 7 verbunden. Die erste äußere Gabel 7 weist eine nicht dargestellte Aufnahme in Form eines Durchbruchs auf, in die ein Rohr 9 einer Gelenkgabel eingesteckt ist und das über einen Spannstift 12 an der ersten äußeren Gabel 7 gesichert ist. Das Rohr 9 ist hier nur teilweise dargestellt und ist an einem nicht dargestellten Ende mit einem weiteren Kreuzgelenk oder einem Doppelkreuzgelenk verbunden und bildet somit eine Gelenkwelle.

An der der ersten inneren Gabel 5 abgewandten Seite weist die Doppelgabel 2 eine zweite innere Gabel 11 auf, die über ein zweites Zapfenkreuz 12 mit einer zweiten äußeren Gabel 13 verbunden ist. Die zweite äußere Gabel 13 ist als Anschlussgabel gestaltet und dient zum Verbinden des Doppelkreuzgelenks 1 mit z.B. einer Zapfwelle eines Getriebes. Hierzu weist die zweite äußere Gabel 13 eine nicht dargestellte Verbindungsbohrung auf, die mit einer Längsverzahnung ausgebildet ist, mit der die zweite äußere Gabel 13 auf einem entsprechend verzahnten Wellenabschnitt aufgeschoben werden kann.

Da das Doppelkreuzgelenk 1 um eine Drehachse D drehend angeordnet ist, ist sicherzustellen, dass Bedienpersonal nicht in drehende Bauteile des Doppelkreuzgelenks 1 bzw. der gesamten Gelenkwelle greifen kann. Hierfür ist eine stillstehende Schutzanordnung vorgesehen. Diese umfasst einen Schutztrichter 15, der drehfest mit einem Gleitring 16 verbunden ist. Der Gleitring 16 ist innerhalb des Schutztrichters 15 angeordnet und ist drehbar gleitend in einer Nut 17 der Doppelgabel 2 aufgenommen. Der Schutztrichter 15 ist um das erste Kreuzgelenk 3 angeordnet und ist über ein Schutzelement 18 mit einem Schutzrohr 19 drehfest verbunden. Das Schutzrohr 19 ist mit einem Gleitring 20 verbunden, der in einer Nut 21 der ersten äußeren Gabel 7 drehbar aufgenommen ist. Das Schutzrohr 19 dient zum Schutz des Rohres 9 und ist um dieses angeordnet. Zur drehfesten Verbindung des Schutztrichters 15 mit dem Schutzrohr 19 ist das Schutzelement 18 vorgesehen, welches elastisch ausgebildet ist, um Winkelabweichungen zwischen dem Schutztrichter 15 und dem Schutzrohr 19 ausgleichen zu können. Das Schutzelement 18 ist im vorliegenden Fall als Membran gestaltet. Zum Verbinden des Schutzelements 18 an dem Schutztrichter 15 weist der Schutztrichter 15 Verbindungsmittel in Form eines Halteschlitzes 41 auf, in dem ein Halteabschnitt 42 des Schutzelements 18 aufgenommen und befestigt ist.

An der dem Schutzelement 18 abgewandten Ende des Schutztrichters 15 ragt dieser lediglich geringfügig über den Gleitring 16 über. Zum Schutz des zweiten Kreuzgelenks 4 ist ein Faltenbalg 23 vorgesehen, der mit einem Adapterring 22 verbunden ist. Der Adapterring 22 ist wiederum mit dem Schutztrichter 15 fest verbunden. Für die Befestigung des Faltenbalgs 23 weist dieser einen Befestigungsabschnitt 24 auf, der in einer Befestigungsaufnahme 25 des Adapterrings 22 befestigt ist.

Der Faltenbalg 23 ist um das zweite Kreuzgelenk 4 angeordnet und weist an einem dem Adapterring 22 entfernten Ende Verbindungsmittel in Form eines Verbindungsabschnitts 26 auf, mit denen der Faltenbalg 23 mittels eines Spannbandes 14 drehfest an einem Getriebegehäuse 8 befestigt ist.

Der Faltenbalg weist mehrere Falten 27 auf, die jeweils eine erste Flanke 28 und eine zweite Flanke 29 aufweisen. Die Flanken 28, 29 sind konusförmig gestaltet, wobei die Flanken 28, 29 winklig zueinander angeordnet sind.

Da der Faltenbalg 23 mit einem stehenden Bauteil drehfest und ferner drehfest über den Adapterring 22 mit dem Schutztrichter 15 verbunden werden kann, wobei dieser über das Schutzelement 18 drehfest mit dem Schutzrohr 19 verbunden ist, ist die gesamte Schutzanordnung drehfest gehalten, so dass sich in dieser das Doppelkreuzgelenk 1 drehen kann, ohne dass Bedienpersonal gefährdet wäre.

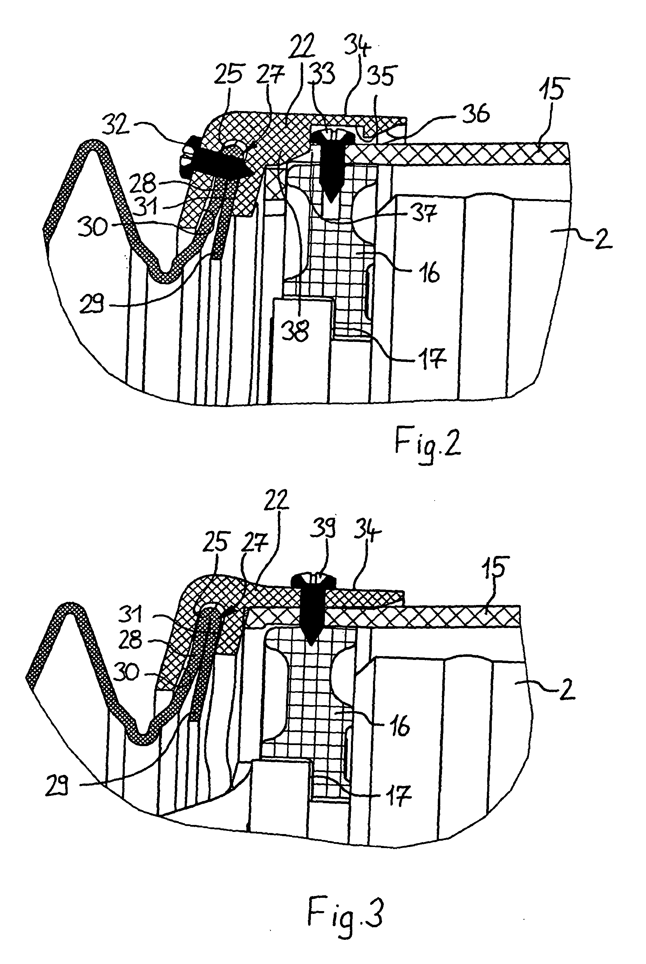

Die Figuren 2 und 3 zeigen vergrößerte Schnittdarstellungen der Schutzanordnung im Bereich des Adapterrings gemäß einer ersten Ausführungsform, wobei die Schnitte gemäß der Figuren 2 und 3 in unterschiedlichen Ebenen radial zur Drehachse D angeordnet sind.

Der Adapterring 22 weist eine Befestigungsaufnahme 25 in Form einer Innenumfangsnut auf. Die Innenumfangsnut umfasst eine erste Befestigungsfläche 30, die dem Schutztrichter 15 zugewandt ist, sowie eine zweite Befestigungsfläche 31, die dem Faltenbalg 23 zugewandt ist. Die beiden Befestigungsflächen 30, 31 sind einander zugewandt und bilden gemeinsam die Innenumfangsnut. Grundsätzlich kann die Befestigungsaufnahme 25 jedoch auch als Außenumfangsnut gestaltet sein. In die Befestigungsaufnahme 25 in Form der Innenumfangsnut ist eine Falte 27 des Faltenbalgs 23 angeordnet. Hierbei handelt es sich um diejenige Falte 27, die am nächsten zum Schutztrichter 15 angeordnet ist. Die beiden Flanken 28, 29 der Falte 27 sind zueinandergeklappt und demnach in Anlage zueinander und parallel zueinander ausgerichtet. Die beiden Flanken 28, 29 sind konusförmig angeordnet, wobei sich der Konus zum Schutztrichter 15 hin öffnet. Die Befestigungsaufnahme 25 ist entsprechend konusförmig gestaltet. Die erste Flanke 28 ist in Anlage zur ersten Befestigungsfläche 30 und die zweite Flanke 29 in Anlage zur zweiten Befestigungsfläche 31 gehalten. Alleine durch die Aufnahme der Falte 27 in die Befestigungsaufnahme 25 ist der Adapterring 22 bereits auf dem Faltenbalg 23 gehalten. Zur weiteren Sicherung sind Befestigungsschrauben 32 vorgesehen, die von außen durch den Adapterring 22 bis in die Befestigungsaufnahme 25 hineingeschraubt werden, wobei die Befestigungsschrauben 32 die Befestigungsaufnahme 25 einmal durchdringen und wieder in die zweite Befestigungsfläche 21 eintauchen. Hierbei werden die Befestigungsschrauben 32 durch die Falte 27 des Faltenbalgs 23 hindurchgeschraubt, so dass der Adapterring 22 auf dem Faltenbalg 23 gesichert ist.

Der so vormontierte Adapterring 22 lässt sich zunächst auf den Schutztrichter 15 aufstecken. Der Schutztrichter 15 ist über Befestigungsschrauben 33 mit dem Gleitring 16 verbunden, wobei die Befestigungsschrauben 33 von außen durch den Schutztrichter 15 radial nach innen in den Gleitring 16 eingeschraubt werden. Die Befestigungsschrauben 33 stehen jeweils mit ihrem Schraubenkopf über die Außenumfangsfläche des Schutztrichters 15 vor.

Der Adapterring 22 weist einen Verbindungsabschnitt 34 auf, der in etwa zylinderförmig gestaltet ist, und mit dem der Adapterring 22 auf dem Schutztrichter 15 sitzt. Zur Montage des Verbindungsabschnitts 34 weist dieser eine Anlauffläche 36 auf, die zur Drehachse D winklig angeordnet ist. Beim Aufschieben des Verbindungsabschnitts 34 kommt die Anlauffläche 36 in Anlage zu den Befestigungsschrauben 33, so dass der Verbindungsabschnitt 34 beim weiteren Aufschieben an den Stellen der Verbindungsschrauben 33 aufgeweitet wird. Zwischen der Anlauffläche 36 und der Befestigungsaufnahme 25 ist für jede Befestigungsschraube 33 eine Ausnehmung 35 vorgesehen, die dem überstehenden Abschnitt der Verbindungsschraube 33 angepasst ist. Das bedeutet, dass jede Ausnehmung 35 den Schraubenkopf einer der Befestigungsschrauben 33 vollständig aufnehmen kann und in ihren Dimensionen an den Schraubenkopf angepasst ist. Beim vollständigen Aufschieben des Verbindungsabschnitts 34 taucht somit die Befestigungsschraube 33 in die Ausnehmung 35 ein, so dass der Verbindungsabschnitt 34 wieder in seine Ausgangsposition zurückfedern kann. Somit wird der Verbindungsabschnitt 34 auf die Befestigungsschrauben 33 aufgesteckt bzw. aufgeclipst und auf diesen vorläufig gehalten. Zur weiteren Befestigung sind weitere Befestigungsschrauben 39 vorgesehen, die von außen in den Verbindungsabschnitt 34 radial nach innen eingeschraubt werden, bis sie in den Verbindungstrichter 15 eingeschraubt sind. Hierbei können die Verbindungsschrauben derart in axialer Richtung relativ zur Drehachse angeordnet sein, dass diese auch gleichzeitig in den Gleitring 16 eintauchen. Andererseits ist es jedoch auch möglich, dass die Befestigungsschrauben seitlich versetzt zum Gleitring 16 angeordnet sind und lediglich in den Schutztrichter 15 eingeschraubt sind.

Zur Drehsicherung bzw. zur Entlastung der Befestigungsschrauben dient eine oder mehrere radial nach innen vorstehende Sicherungsnocken 38, die an dem Adapterring 22 vorgesehen sind. Die Sicherungsnocken 38 greifen radial in Sicherungsausnehmungen 37 des Schutztrichters 15 ein, so dass der Adapterring 22 in Umfangsrichtung über die Sicherungsnocken 38 gegen die Sicherungsausnehmung 37 abgestützt ist. Somit wird Drehmoment über die Sicherungsnocken 38 abgestützt und nicht über die Befestigungsschrauben, die den Adapterring 22 mit dem Schutztrichter 15 verbinden.

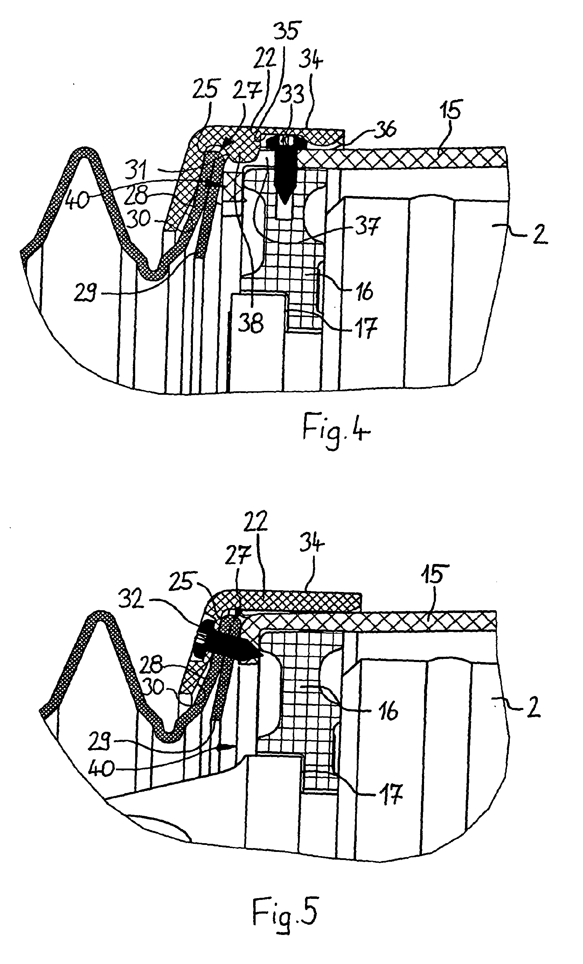

Die Figuren 4 und 5 zeigen eine zweite Ausführungsform einer erfindungsgemäßen Schutzanordnung, wobei die Befestigung des Adapterrings auf dem Schutztrichter 15 identisch zur Befestigung gemäß der ersten Ausführungsform ist.

Figur 4 zeigt jedoch, dass die Befestigungsaufnahme 25 durch eine erste Befestigungsfläche 30, die umlaufend gestaltet ist, und durch mehrere der ersten Befestigungsfläche 30 zugewandte zweite Befestigungsflächen 31 gebildet ist, wobei die zweiten Befestigungsflächen 31 jeweils durch einen der Sicherungsnocken 38 gebildet wird. Somit lässt sich der Adapterring 22 bei der Vormontage auch auf dem Faltenbalg 23 fixieren. Zur sicheren Befestigung des Faltenbalges 23 wird die in der Befestigungsaufnahme 25 aufgenommene Falten 27 durch die erste Befestigungsfläche gegen das erste Ende 40 des Schutztrichters 15 gedrückt, so dass die Falte 27 zwischen dem ersten Ende 40 des Schutztrichters 15 und der ersten Befestigungsfläche 30 eingeklemmt und gesichert ist. Zur Befestigung dienen Befestigungsschrauben 32 (Fig. 5), die vergleichbar zu der ersten Ausführungsform von außen in den Adapterring 22 eingeschraubt wird. Die Befestigungsschrauben 32 werden dann durch die Falte 27 in das erste Ende 40 des Schutztrichters 15 eingeschraubt.

### Bezugszeichenliste

- 1: Doppelkreuzgelenk
- 2: Doppelgabel
- 3: erstes Kreuzgelenk
- 4: zweites Kreuzgelenk
- 5: erste innere Gabel
- 6: erstes Zapfenkreuz
- 7: erste äußere Gabel
- 8: Getriebegehäuse
- 9: Rohr
- 10: Spannstift
- 11: zweite innere Gabel
- 12: zweites Zapfenkreuz
- 13: zweite äußere Gabel
- 14: Spannband
- 15: Schutztrichter
- 16: Gleitring
- 17: Nut
- 18: Schutzelement
- 19: Schutzrohr
- 20: Gleitring
- 21: Nut
- 22: Adapterring
- 23: Faltenbalg
- 24: Befestigungsabschnitt
- 25: Befestigungsaufnahme
- 26: Verbindungsabschnitt
- 27: Falte
- 28: erste Flanke
- 29: zweite Flanke
- 30: erste Befestigungsfläche
- 31: zweite Befestigungsfläche
- 32: Befestigungsschraube
- 33: Befestigungsschraube
- 34: Verbindungsabschnitt
- 35: Ausnehmung
- 36: Anlauffläche
- 37: Sicherungsausnehmung
- 38: Sicherungsnocken
- 39: Befestigungsschraube
- 40: erstes Ende
- 41: Halteschlitz
- 42: Halteabschnitt

## Patentansprüche

1. Schutzanordnung für ein um eine Drehachse (D) drehend angeordnetes Doppelkreuzgelenk (1) umfassend
einen rohrförmigen Schutztrichter (15),
einen Gleitring (16), der, zur drehenden Lagerung der Schutzanordnung an dem Doppelkreuzgelenk (1) drehbar gelagert werden kann, drehfest mit dem Schutztrichter (15) verbunden ist,
einen Adapterring (22), der mit dem Schutztrichter (15) drehfest verbunden ist, sowie
einen Faltenbalg (23), der drehfest mit dem Adapterring (22) verbunden ist,
**dadurch gekennzeichnet,**
**dass** der rohrförmigen Schutztrichter (15) an seinem dem Adapterring (22) axial abgewandten Ende Verbindungsmittel zum drehfesten Verbinden des Schutztrichters (15) mit einem Gelenkwellenschutz einer mit dem Doppelkreuzgelenk (1) verbundenen Welle aufweist und
**dass** der Faltenbalg (23) Verbindungsmittel zum drehfesten Verbinden des Faltenbalgs (23) mit einem stehenden Bauteil aufweist, um die Schutzanordnung gegenüber dem stehenden Bauteil drehfest zu halten.

2. Schutzanordnung nach Anspruch 1,
**dadurch gekennzeichnet,**
**dass** der Schutztrichter (15) ein erstes Ende (40) aufweist, mit dem der Schutztrichter (15) sowohl mit dem Gleitring (16) als auch mit dem Adapterring (22) verbunden ist.

3. Schutzanordnung nach einem der Ansprüche 1 oder 2,
**dadurch gekennzeichnet,**
**dass** der Adapterring (22) um den Gleitring (16) angeordnet ist.

4. Schutzanordnung nach einem der Ansprüche 1 bis 3,
**dadurch gekennzeichnet,**
**dass** sowohl der Schutztrichter (15) als auch der Adapterring (22) mit dem Gleitring (16) verbunden sind.

5. Schutzanordnung nach einem der Ansprüche 1 bis 4,
**dadurch gekennzeichnet,**
**dass** der Faltenbalg (23) einen Befestigungsabschnitt (24) aufweist, mit dem der Faltenbalg (23) mit dem Adapterring (22) verbunden ist.

6. Schutzanordnung nach Anspruch 5,
**dadurch gekennzeichnet,**
**dass** der Adapterring (22) eine Befestigungsaufnahme (25) aufweist, in der der Befestigungsabschnitt (24) des Faltenbalgs (23) aufgenommen ist.

7. Schutzanordnung nach Anspruch 6,
**dadurch gekennzeichnet,**
**dass** die Befestigungsaufnahme (25) zumindest eine dem Schutztrichter (15) zugewandte erste Befestigungsfläche (30) aufweist, gegen die der Befestigungsabschnitt (24) des Faltenbalgs (23) gehalten ist.

8. Schutzanordnung nach Anspruch 7,
**dadurch gekennzeichnet,**
**dass** genau eine umlaufende erste Befestigungsfläche (30) vorgesehen ist.

9. Schutzanordnung nach einem der Ansprüche 6 bis 8,
**dadurch gekennzeichnet,**
**dass** die Befestigungsaufnahme (25) zumindest eine dem Faltenbalg (23) zugewandte zweite Befestigungsfläche (31) aufweist, gegen die der Befestigungsabschnitt (24) des Faltenbalgs (23) gehalten ist.

10. Schutzanordnung nach Anspruch 9,
**dadurch gekennzeichnet,**
**dass** mehrere Vorsprünge am Adapterring (22) vorgesehen sind, die jeweils eine zweite Befestigungsfläche (31) bilden.

11. Schutzanordnung nach Anspruch 9,
**dadurch gekennzeichnet,**
**dass** genau eine umlaufende dem Faltenbalg (23) zugewandte zweite Befestigungsfläche (31) vorgesehen ist, die zusammen mit genau einer umlaufenden ersten Befestigungsfläche (30) eine Befestigungsnut bildet.

12. Schutzanordnung nach Anspruch 11,
**dadurch gekennzeichnet,**
**dass** die Befestigungsnut als Innenumfangsnut ausgebildet ist.

13. Schutzanordnung nach einem der Ansprüche 6 bis 12,
**dadurch gekennzeichnet,**
**dass** die Befestigungsflächen (30, 31) jeweils bezogen auf die Drehachse (D) konusförmig gestaltet sind.

14. Schutzanordnung nach einem der Ansprüche 6 bis 13,
**dadurch gekennzeichnet,**
**dass** der Faltenbalg (23) mehrere umlaufende Falten aufweist, die jeweils durch zwei Flanken (28, 29) gebildet sind, und
**dass** der Befestigungsabschnitt (24) des Faltenbalgs (23) eine Falte (27) umfasst, deren Flanken (28, 29) aneinanderliegen und gegen die mindestens eine erste Befestigungsfläche (30) in Anlage gehalten sind.

15. Schutzanordnung nach einem der Ansprüche 1 bis 14,
**dadurch gekennzeichnet,**
**dass** Befestigungsschrauben (32) durch den Adapterring (22) in den Befestigungsabschnitt (24) des Faltenbalgs (23) eingeschraubt sind.

## Claims

1. Protective arrangement for a double universal joint (1) arranged rotatingly around a rotational axis (D), comprising
a tube-like protective cone (15),
a sliding ring (16), which is non-rotationally connected to the protective cone (15) and which can rotationally be supported for the rotational support of the protective arrangement on the double universal joint (1),
an adaptor ring (22), which is non-rationally connected to the protective cone (16), as well as
a boot (23), which is non-rotationally connected to the adaptor ring (22), **characterised in**
**that** the tube-like protective cone (15) has at its end, facing axially away from the adaptor ring (22), connection means for the non-rotational connection of the protective cone (15) to a propeller-shaft guard of a shaft connected to the double universal joint (1), and
**that** the boot (23) has connection means for the non-rotational connection of the boot (23) to a stationary component, to hold non-rotationally the protective arrangement relative to the stationary component.

2. Protective arrangement according to claim 1,
**characterised in**
**that** the protective cone (15) has a first end (40) by which the protective cone (15) is connected to the sliding ring (16) as well as the adaptor ring (22).

3. Protective arrangement according to one of claims 1 or 2,
**characterised in**
**that** the adaptor ring (22) is arranged around the sliding ring (16).

4. Protective arrangement according to one of claims 1 to 3,
**characterised in**
**that** the protective cone (15) as well as the adaptor ring (22) are connected to the sliding ring (16).

5. Protective arrangement according to one of claims 1 to 4,
**characterised in**
**that** the boot (23) has an attachment portion (24), by means of which the boot (23) is connected to the adaptor ring (22).

6. Protective arrangement according to claim 5,
**characterised in**
**that** the adaptor ring (22) has an attachment receptacle (25), in which the attachment portion (24) of the boot (23) is accommodated.

7. Protective arrangement according to claim 6,
**characterised in**
**that** the attachment receptacle (25) has at least one first attachment face (30) facing the protective cone (15) against which the attachment portion (24) of the boot (23) is held.

8. Protective arrangement according to claim 7,
**characterised in**
**that** exactly one circumferentially extending attachment face (30) is provided.

9. Protective arrangement according to one of claims 6 to 8,
**characterised in**
**that** the attachment receptacle (25) has at least one second attachment face (31), which faces the boot (23) and against which the attachment portion (24) of the boot (23) is held.

10. Protective arrangement according to claim 9,
**characterised in**
**that** several projections are provided on the adaptor ring (22), which respectively form a second attachment face (31).

11. Protective arrangement according to claim 9,
**characterised in**
**that** exactly one circumferentially extending second attachment face (31), which faces the boot (23) and which forms together with exactly one circumferentially extending first attachment face (30) an attachment groove.

12. Protective arrangement according to claim 11,
**characterised in**
**that** the attachment groove is formed as an internal circumferential groove.

13. Protective arrangement according to one of claims 6 to 12,
**characterised in**
**that** the attachment faces (30, 31) are formed respectively cone-like in reference to the rotational axis (D).

14. Protective arrangement according to one of claims 6 to 13,
**characterised in**
**that** the boot (23) has several circumferentially extending folds, which respectively are formed by two flanks (28, 29), and
**that** the attachment portion (24) of the boot (23) comprises one fold (27), which flanks (28, 29) abut each other and which are held in abutment to the at least one first attachment face (30).

15. Protective arrangement according to one of claims 1 to 14,
**characterised in**
**that** attachment screws (32) are screwed through the adaptor ring (22) into the attachment portion (24) of the boot (23).

## Revendications

1. Agencement de protection pour un joint universel double (1) disposé de façon rotative autour d'un axe de rotation, comprenant
un entonnoir de protection (15) en forme de tube,
une bague de glissement (16), qui peut être montée de façon rotative pour le montage rotatif de l'agencement de protection sur le joint universel double (1), étant reliée de façon solidaire en rotation à l'entonnoir de protection (15),
une bague d'adaptateur (22), qui est reliée de façon solidaire en rotation à l'entonnoir de protection (15) et
un soufflet de protection (23), qui est relié de façon solidaire en rotation à la bague d'adaptateur (22),
**caractérisé en ce que**
l'entonnoir de protection de forme tubulaire (15) présente sur son extrémité, opposée axialement à la bague d'adaptateur (22), des moyens de liaison pour la liaison solidaire en rotation de l'entonnoir de protection (15) avec une protection d'arbre articulé d'un arbre relié au joint universel double (1) et **en ce que** le soufflet de protection (23) présente des moyens de liaison pour la liaison solidaire en rotation du soufflet de protection (23) avec un composant fixe, afin de maintenir le dispositif de protection de façon solidaire en rotation par rapport au composant fixe.

2. Agencement de protection selon la revendication 1, **caractérisé en ce que** l'entonnoir de protection (15) présente une première extrémité (40), avec laquelle l'entonnoir de protection (15) est relié aussi bien à la bague de glissement (16) qu'à la bague d'adaptateur (22).

3. Dispositif de protection selon l'une des revendications 1 ou 2,
**caractérisé en ce que**
la bague d'adaptateur (22) est disposée autour de la bague de glissement (16).

4. Agencement de protection selon l'une des revendications 1 à 3,
**caractérisé en ce que**
aussi bien l'entonnoir de protection (15) que la bague d'adaptateur (22) sont reliés à la bague de glissement (16).

5. Agencement de protection selon l'une des revendications 1 à 4,
**caractérisé en ce que**
le soufflet de protection (23) présente un tronçon de fixation (24), par lequel le soufflet de protection (23) est relié à la bague d'adaptateur (22).

6. Agencement de protection selon la revendication 5,
**caractérisé en ce que**
la bague d'adaptateur (22) présente un logement de fixation (25) dans lequel le tronçon de fixation (24) du soufflet de protection (23) est réceptionné.

7. Agencement de protection selon la revendication 6,
**caractérisé en ce que**
le logement de fixation (25) présente au moins une première surface de fixation (30), tournée vers l'entonnoir de protection (15), surface contre laquelle le tronçon de fixation (24) du soufflet de protection (23) est maintenu.

8. Dispositif de protection selon la revendication 7,
**caractérisé en ce**
**qu'**il est prévu exactement une première surface de fixation (30) périphérique.

9. Agencement de protection selon l'une des revendications 6 à 8,
**caractérisé en ce que**
le logement de fixation (25) présente au moins une seconde surface de fixation (31) tournée vers le soufflet de protection (23), surface contre laquelle le tronçon de fixation (24) du soufflet de protection (23) est maintenu.

10. Agencement de protection selon la revendication 9,
**caractérisé en ce que**
plusieurs saillies sont prévues sur la bague d'adaptateur (22), lesquelles forment à chaque fois une seconde surface de fixation (31).

11. Agencement de protection selon la revendication 9,
**caractérisé en ce**
**qu'**il est prévu exactement une seconde surface de fixation (31) périphérique, tournée vers le soufflet de protection (23), laquelle surface forme une rainure de fixation en même temps qu'avec exactement une première surface de fixation (30) périphérique.

12. Agencement de protection selon la revendication 11,
**caractérisé en ce que**
la rainure de fixation est conçue comme une rainure périphérique interne.

13. Agencement de protection selon l'une des revendications 6 à 12,
**caractérisé en ce que**
les surfaces de fixation (30, 31) sont conçues en forme de cône à chaque fois par rapport à l'axe de rotation (D).

14. Agencement de protection selon l'une des revendications 6 à 13,
**caractérisé en ce que**
le soufflet de protection (23) présente plusieurs plis périphériques qui sont formés à chaque fois par deux flancs (28, 29), et
**en ce que** le tronçon de fixation (24) du soufflet (23) comprend un pli (27) dont les flancs (28, 29) sont contigus et contre lequel au moins une première surface de fixation (30) est maintenue en appui.

15. Agencement de protection selon l'une des revendications 1 à 14,
**caractérisé en ce que**
des vis de fixation (32) sont vissées par la bague d'adaptateur (22) dans le tronçon de fixation (24) du soufflet de protection (23).
